Europäisches Patentamt

**European Patent Office**

**Office européen des brevets**

(11) Veröffentlichungsnummer: **0 387 971**
**A2**

## (12) EUROPÄISCHE PATENTANMELDUNG

(21) Anmeldenummer: **90201512.2**

(22) Anmeldetag: **13.06.90**

(51) Int. Cl.⁵: **A01G 31/02**

(30) Priorität: **16.06.89 NL 8901529**

(43) Veröffentlichungstag der Anmeldung:
**19.09.90 Patentblatt 90/38**

(84) Benannte Vertragsstaaten:
**BE DE FR NL**

(71) Anmelder: **BLOM KUNSTSTOFFEN INDUSTRIE TWELLO B.V.**
**Nijverheidsstraat 5**
**NL-7391 ZT Twello(NL)**

(72) Erfinder: **Van Hecke, Antonius Ludovicus**
**Dorpsstraat 37**
**NL-7025 AB Halle(NL)**

(74) Vertreter: **de Wit, Gerard Frederik, Ir. et al**
**Octrooi- en Merkenbureau De Wit B.V.**
**Breitnerlaan 146**
**NL-2596 HG Den Haag(NL)**

(54) **Verfahren und Vorrichtung zur Züchtung von Chicorée oder dergleichen und Wanne für eine solche Vorrichtung.**

(57) Chicorée oder dergleiche wird gezüchtet auf eine bewegbare Matte (11) in Wannen (3) mit beidseitig einer Zwischenwand (9,10), die eine Rinne bildet für die Zufuhr bezugsweise die Abfuhr des vorzugsweise Nährstoffe enthaltenden Wassers. Die Wannen sind übereinander angeordnet und werden von einer Wellenplatte (4) getragen. Sie sind von Kunststoff und die Verbindung zwischen den Rinnen und dem Mittenteil der Wanne mittels Durchlässe oder Ueberschwemmungsstellen ist ungleich hoch für den beiden Rinnen.

EP 0 387 971 A2

## Verfahren und Vorrichtung zur Züchtung von Chicoree oder dergleiche und Wanne für eine solche Vorrichtung.

Chicorée wird gezüchtet indem man erst die Chicoréepflanzen wachsen lässt, die Stümpfe oder Wurzel erntet und die Stümpfe "zieht", wobei Strünkchen aus den Stümpfen wachsen, die die eigentliche Konsum-Chicorée bilden.

Die alteshergebrachte Arbeitsweise, dass man die Stümpfe in dem Boden liesz ziehen ist bereits Jahre ersetzt durch die Ziehung oder Zucht in einer Vorrichtung, versehen mit Mitteln zur Aurechterhaltung einer Luftzirkulation und mit Behältern die mit Wasserzufuhr- und Wasserabfuhrmitteln versehen sind, nebst Mittel zum Unterstützen von Chicorée-Stümpfe.

In der Praxis benutzte man dabei Holzkisten mit sogenannter Landwirtschaftsfolie für die Wasserdichte. Diese Kisten wurden aufeinander gesetzt mit einer Wasserzufuhr für die Höchste, Wasserüberlaufmittel für die zwischen liegenden Kisten und einem Wasserabfuhr für die Untere. Dabei hat sich herausgestellt, dass es unmöglich ist das Holz der Kisten ausreichend trocken zu halten um vermodern vorzubeugen,so dass eine erhebliche Versorgungsaufwand notwendig war. Ausserdem waren die benutzten Systeme ungeeignet für effektive Mechanisierung oder sogar Automatisierung.

Ein Beispiel eines ähnlichen Systems zeigt FR-A-1.069.600, das eine Zahl Zuchtschüssel zeigt, die mit Wasserhebel versehen sind um Wasser von einem Schüssel nach einem darunter liegenden Schüssel fliessen zu lassen.

Weitere Probleme waren, dass es oft schwierig ist an allen Stellen der Vorrichtung dieselbe hohe Qualität der Chicorée zu bekommen.

Diese Schwierigkeiten werden erfindungsgemäss beseitigt oder wenigstens in erheblichem Masse verkleinert, indem die Stümpfe in einem Netzähnlichen Gebilde angeordnet werden und dass die Behälter Wannen sind mit an einander gegenüberliegenden Wänden Rinnen, die mit Durchströmungsmitteln versehen sind wodurch Wasser, an der einen Seite aus der Rinne in die Wanne und an der anderen Seite aus der Wanne in die Rinne fliesst, und dass nachdem die Strünkchen gewachsen sind das netzähnliche Gebilde in der Richtung der Rinnen aus der Wanne gezogen wird.

Es wird darauf hingewiesen, dass es für die Zucht von Pilzen bereits bekannt ist einen festen Nährboden auf eine bewegliche Matte zu legen, Pilze zu ernten und letzten Endes der Boden mit der Matte zu entfernen.

Bei der Zucht von Chicorée soll man, wie sich herausgestellt hat, dafür sorgen, dass das Wasser eine Temperatur von etwa 16° C hat und die Luft etwa 11° C. Durch den grossen Wärmeaustausch zwischen Luft und Wasser entsteht die Möglichkeit dass örtlich nicht die richtigen Temperaturen angehalten werden können.

Ein weiterer festgestellter Nachteil ist, dass Chicorée die in der Nähe des Mittens der Oberfläche der Wasserschicht gezüchtet ist öfters eine etwas niedrigere Qualität hat als Chicorée, die in der Nähe der Rändern gezogen ist.

Eine dritte Schwierigkeit ist, dass die Gesamtkonstruktion billig sein soll, will man konkurieren können.

Eine Lösung, die relativisch billig hergestellt werden kann und die die Möglichkeit hat die erwähnten Nachteile zu beheben oder verringern, wird bekommen mit einer Vorrichtung zur Züchtung von Chicorée oder dergleiche, versehen mit Mitteln zur Aufrechterhaltung einer Luftzirkulation und mit Behältern die mit Wasserzufuhr- und Wasserabfuhrmitteln versehen sind, nebst Mittel zum Unterstützen von Chicorée-Stümpfe, die dadurch gekennzeichnet wird, dass sie übereinander angeordnete Wannen enthält mit an zwei einander gegenüberliegenden Wänden je eine Rinne, die durch Durchströmungsmittel mit der Wanne verbunden sind, wobei Wasserzufuhrmittel mit der einen Rinne verbunden sind und Wasserabfuhrmittel mit der anderen Rinne, derart dass die Wasserzufuhrmittel geeignet sind in der einen Rinne einen höheren Wasserpegel aufrechtzuerhalten als die Wasserabfuhrmittel in der anderen Rinne.

Zwecks Verringerung des Wärmeaustausches zwischen einer Luftschicht und dem Wasser in einer Wanne, die sich über diese Schicht befindet, sind nach einer weiteren Ausbildung der Erfindung die Wannen je auf eine Unterstützung gelagert, die ein Wärmewiderstand bildet zwischen dem Inhalt der Wanne und dem Raum über die darunter liegende Wanne.

Vorzugsweise hat die Unterstützung dabei eine wellenförmige Platte und arbeitet derart zusammen mit der Unterseite der diesbezüglichen Wanne, dass zwischen der Unterstützung und der Wanne Lufträume gebildet werden.

Bei der Erfindung können die Wellen sinusförmig, rechteckig, trapeziumförmig oder irgendwie andersartig geformt sein.

Naturgemäss kann man auch in diesen Räumen oder ergänzend zu der Unterstützungs-Wanne-Kombination Isoliermaterial anordnen.

In dieser Hinsicht wird gewiesen auf EP-A-0.096.926 aus der es bei einer Pflanzenzuchtvorrichtung mit abwechseind Schichten in denen sich Pflanzenzuchtblöcke befinden und Luftschichten, eine Wärme-isolierplatte anzuordnen, damit die Wärme der Beleuchtung der Pflanzen nicht den Boden der Pflanzenzuchtblöcke erreicht.

FR-A-2.520.190 beschreibt eine wellenförmige Platte zwischen einem darunter liegenden geheissten Raum und eine Erdschicht in der die Pflanzen wurzeln.

Bei der Erfindung können die Unterstützung und die Wanne derart mit einander verbunden werden, dass sie einander gegenseitig versteifen. Die Unterstützung und die Wanne können von Kunststoff sein um ein hygienisches und korrosionsfestes Gebilde zu bekommen, das einfach gereinigt werden kann.

Abgesehen von dem sehr kostspieligen rostfreien Stahl besteht keine gleichwertige Lösung. Verzinkter Stahl zeigt auf die Dauer immer Beschädigungen der Zinkschicht und demzufolge Korrosion. Es ist dabei zu befürchten, dass eine derartige Stahlkorrosion die Farbe der gezuchteten Chicorée beeinträchtigen wird.

Die erfindungsgemässe Wasser zu- und -abfuhr kann sowohl aus Durchlochungen wie aus Ueberschwemmungstellen bestehen und ist viel leichter zu reinigen als Systeme mit Röhrchen, Spritzöffnungen und dergleichen.

Während der Züchtung der Chicoréestrünkchen werden die Stümpfe an ihrer Oberseite dikker, so dass das Ganze eine Ausdehnung erfährt. Um dennoch eine gute mechanische Abfuhr zu ermöglichen wird nach einer weiteren Ausbildung der Erfindung vorgesehen, dass Führungsmittel für die Stümpfe entlang der Rinnen angeordnet sind.

Schliesslich umfasst die Erfindung auch eine Wanne wie die im Anspruch 7 beschrieben worden ist.

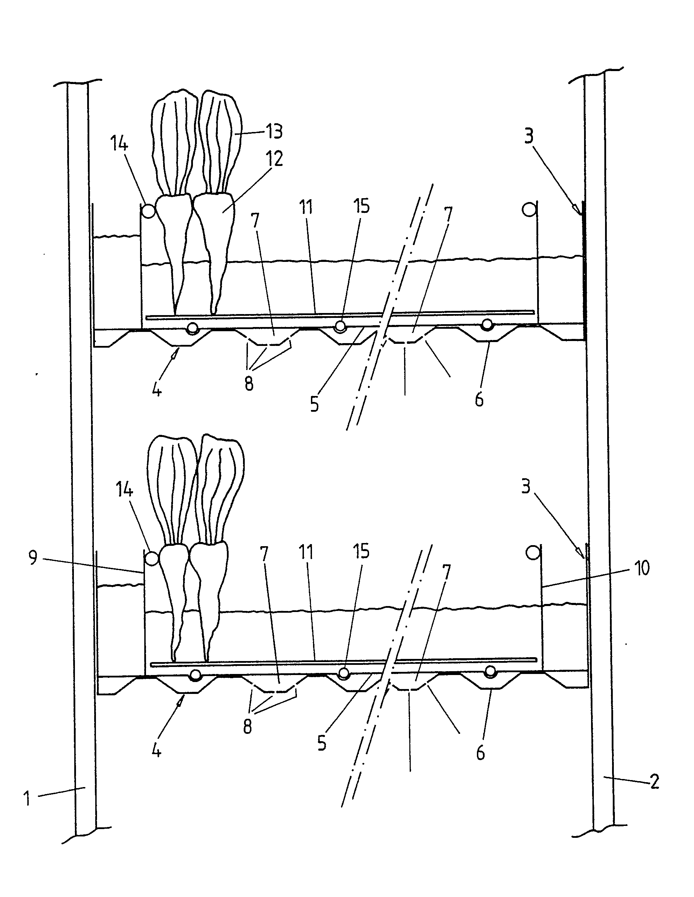

Die Erfindung wird im Folgenden näher erörtert an Hand der Zeichnung in der ein Querschnitt durch eine erfindungsgemässe Vorrichtung gezeigt worden ist.

In der Zeichnung sind mit 1 und 2 Ständer angegeben, wodurch mit nicht gezeichneten Unterstützungsmitteln wellenförmige Platten 4 und Wannen 3 getragen werden. Diese Wannen sind aus Kunststoff und ihr Boden 5 ist, je verbunden mit einer profilierten oder wellenförmigen Platte 4, die vorzugsweise aus Kunststoff angefertigt ist. Ein oder mehrere der Räume, die in der Längerichtung der Wanne zwischen den Wellen 6 der Wellenplatte 4 und dem Stutzboden 5 der Wanne eingeschlossen sind, wird oder werden als Luftführung 7 benutzt, in der feine Luftaustrittöffnungen 8 angeordnet sind.

Der Boden 5 der Wanne 3 bildet zusammen mit der Wellenplatte 4 eine steife isolierende "sandwich"-Struktur.

Nahe ihren Seitenwänden hat die Wanne Zwischenwänden 9 bezugs weise 10, in denen Durchlässe oder Ueberschwemmungsstellen angeordnet sind, in einer höheren Lage bei 9 als bei 10, so dass bei Zufuhr von Wasser an die Rinne zwischen der Seitenwand der Wanne und der Zwischenwand 9 Wasser zum Mittenteil der Wanne strömt und erst wieder wegströmt wenn der Pegel erreicht ist, wobei Abfuhr durch die Durchlässe oder Ueberschwemmungsstellen der Zwischenwand 10 möglich ist. Die Ueberschwemmungsstellen können örtliche Wanderniedrigungen sein, die zum Beispiel V-förmig sind.

Weiter ist schematisch eine transportierbare Matte 11 angedeutet, und sind, ebenfalls schematisch, einige Chicorée-stümpfe 12 mit den auf ihnen gewachsenen Strünkchen 13 gezeigt. Diese Stümpfe ruhen mit ihren Unterseiten auf der Matte 11 und werden beim Einfüllen einfach gegeneinander gesetzt. Wenn die Strünkchen anfangen zu wachsen wird die Oberseite der Stümpfe etwas dicker, wodurch sie sich zu den Seitenwänden hin bewegen. Aus diesem Grund ist dort eine Führung angeordnet, die in der Breiterichtung der Wanne steuerbar ist und zum Beispiel durch einen aufbläsbaren Schlauch 14 gebildet wird.

Wenn man die Chicorée ernten will, wird das Band 11, das vorzugsweise aus einer Matte oder dergleiche besteht, in der Richtung senkrecht zur Zeichnungsebene bewegt nachdem der Druck in den Schläuchen 14 herabgelassen ist. Um dieses zu tun kann man erst das Wasser aus der Wanne weglaufen lassen und dann das Band 11 abführen, wobei es möglich ist die Endwand der Wanne 3 entfernbar zu gestalten oder aber das Band 11 etwas in die Höhe zu leiten und über die Endwand zu führen.

Es wird klar sein, dass mit der Erfindung der Wärmeaustausch zwischen dem Wasser und der Luft erheblich herabgesetzt wird und dass insbesondere die Luft kaum zum Wärmeaustausch mit dem Wasser gekommen ist bevor sie die Chicoréestrünkchen erreicht. Ausserdem wird mit der Wellenplatte 4 ausser einer guten Wärmeisolation auch eine sehr zweckmässige Versteifung des Bodens der Wanne 3 bekommen.

Bei Benutzung der gezeigten Vorrichtung werden Nährstoffe dem Wasser zugesetzt, wobei sich herausgestellt hat dass das Wasser einen so hoch möglichen Sauerstoffgehalt haben soll. Dieses kann naturgemäss erreicht werden durch das Wasser mit Sauerstoff zu sättigen bevor es der Vorrichtung zugeführt wird, aber es ist auch möglich an der Unterseite der Wanne poröse Röhrchen oder Schläuchchen 15 anzuordnen, die Luft in das Wasser in der Wanne 3 blasen. Die Luft bekommt zwar die Temperatur des Wassers, aber gerade weil die Luftzufuhr mit der richtigen Temperatur über die ganze Oberfläche wo sich Chicorée-strünkchen befinden verteilt ist, ist eine solche Sauerstoffzufuhr an das Wasser erlaubt.

Zusammenfassend gibt die Erfindung ein wirtschaftliches und hygienisches System mit wenig Wärmeverluste zwischen Luft und Wasser, eine gleichmässigere Verteilung der Luft und eine wirtschaftliche Ausnutzung der Mittel für die Luftzufuhr und/oder der Isolation, weil sie den Boden versteifen.

Obwohl die Erfindung anhand der Züchtung von Chicorée beschrieben worden ist, kann sie auch Anwendung finden für zum Beispiel die Züchtung von Spargeln. Sie umfässt deshalb die Züchtung aller Pflanzgebilde, die mit ihr gezüchtet werden können.

## Ansprüche

1. Verfahren zur Züchtung von Chicorée oder dergleiche, wobei Chicorée-Stümpfe (12) in eeinem Behälter (3) angeordnet werden und mit Wasser, Nährstoffen und Luft versehen werden wenn die Strünkchen (13) wachsen, dadurch gekennzeichnet, dass die Stümpfe in einem netzähnlichen Gebilde angeordnet werden und dass die Behälter Wannen sind mit an einander gegenüberliegenden Wänden Rinnen, die mit Durchströmungsmitteln versehen sind wodurch Wasser, an der einen Seite aus der Rinne in die Wanne und an der anderen Seite aus der Wanne in die Rinne fliesst, und dass nachdem die Strünkchen gewachsen sind das netzähnliche Gebilde in der Richtung der Rinnen aus der Wanne gezogen wird.

2. Vorrichtung zur Züchtung von Chicorée oder dergleiche, versehen mit Mitteln zur Aufrechterhaltung einer Luftzirkulation und mit Behältern die mit Wasserzufuhr- und Wasserabfuhrmitteln versehen sind, nebst Mittel zum Unterstützen von Chicorée-Stümpfe, dadurch gekennzeichnet, dass sie übereinander angeordnete Wannen (3) enthält mit an zwei einander gegenüberliegenden Wänden je eine Rinne, die durch Durchströmungsmittel mit der Wanne verbunden sind, wobei Wasserzufuhrmittel mit der einen Rinne verbunden sind und Wasserabfuhrmittel mit der anderen Rinnen, derart dass die Wasserzufuhrmittel geeignet sind in der einen Rinne einen höheren Wasserpegel aufrechtzuerhalten als die Wasserabfuhrmittel in der anderen Rinne.

3. Vorrichtung nach Anspruch 2, dadurch gekennzeichnet, dass die Wannen je auf eine Unterstützung gelagert sind, die ein Wärmewiderstand bildet zwischen dem Inhalt der Wanne und dem Raum über die darunter liegende Wanne.

4. Vorrichtung nach Anspruch 3, dadurch gekennzeichnet, dass die Unterstützung eine wellenförmige Platte (4) hat und derart mit der Unterseite (5) der diesbezüglichen Wanne (3) zusammenarbeitet, dass zwischen der Unterstützung und der Wanne Lufträume (6,7) gebildet werden.

5. Vorrichtung nach Anspruch 4, dadurch gekennzeichnet, dass wenigstens einer der Räume (7) mit Luftzuführungsmitteln und feinen Luftaustrittsöffnungen (8) versehen ist.

6. Vorrichtung nach einem oder mehreren der Ansprüche 2-5, dadurch gekennzeichnet, dass Führungsmittel (14) für die Stümpfe (12) entlang der Rinnen angeordnet sind, die in der Breiterichtung der Wannen steuerbar sind.

7. Wanne für eine Vorrichtung nach Anspruch 2-6, bestehend aus einem Boden (5) mit an zwei einander gegenüberliegenden Seiten eine Wannewand und in einer Entfernung von jeder dieser Wannewände eine Zwischenwand (9,10) die mit Durchlassmitteln versehen ist, derart dass zwischen den Wannenwänden und den Zwischenwänden Rinnen mit Durchlassmitteln gebildet werden, wobei die Durchlassmittel an der einen Seite einen höheren Pegel haben als die an der anderen Seite.